# EUROPÄISCHE PATENTSCHRIFT

(11) **EP 2 491 639 B1**
(45) Veröffentlichungstag und Bekanntmachung des Hinweises auf die Patenterteilung: **25.11.2015**
(21) Anmeldenummer: 10770954.5
(22) Anmeldetag: 06.10.2010
(51) Int. Cl.: H02J 9/06, G05B 19/042

(54) **SICHERHEITSSTEUERUNG FÜR EIN STELLGLIED**
SAFETY CONTROLLER FOR AN ACTUATOR
COMMANDE DE SÉCURITÉ POUR UN ÉLÉMENT DE COMMANDE

(30) Priorität: 22.10.2009 CH 16192009
(43) Veröffentlichungstag der Anmeldung: 29.08.2012
(73) Patentinhaber: Belimo Holding AG, 8340 Hinwil (CH)
(72) Erfinder: FURRER, Andreas, CH-8623 Wetzikon (CH); OCHSENBEIN, Martin, CH-8332 Russikon (CH)
(74) Vertreter: Roshardt, Werner Alfred
(86) Internationale Anmeldenummer: PCT/CH2010/000247
(87) Internationale Veröffentlichungsnummer: WO 2011/047490

(56) Entgegenhaltungen:
- WO-A1-03/001123
- WO-A1-2007/134471
- GB-A- 1 367 170
- US-A- 4 977 818
- US-A1- 2007 176 570

## Beschreibung

### Technisches Gebiet

Die Erfindung betrifft eine Sicherheitssteuerung für ein Stellglied mit einer Stellwertausgabeschaltung, welche einen eine Sicherheitsposition des Stellglieds definierenden Sicherheitsstellwert für das Stellglied ausgibt. Insbesondere ist die Sicherheitssteuerung für ein Stellglied mit einem Stellantrieb mit einer Klappe oder einem Ventil zur Steuerung oder Regelung eines Gas- oder Flüssigkeitsstroms bestimmt. Die Sicherheitssteuerung kommt vorzugsweise in einer Anlage für Heizung-Lüftung-Klima (HLK), Brand- und/oder Raumschutz zur Anwendung.

Weiter betrifft die Erfindung eine Anlage mit einer solchen Sicherheitssteuerung und ein Verfahren zum Betreiben einer Anlage.

### Stand der Technik

Zur Einstellung von Klappen oder Ventilen in einem Lüftungs- oder Wasserleitungssystem und somit zur Regelung eines Luft- oder Wasserstroms werden so genannte Stellantriebe verwendet, wobei relativ schwache Elektromotoren über ein Untersetzungsgetriebe die Klappen oder Ventile respektive die Regelorgane antreiben. Das Schwenken der Klappe oder das Drehen eines Kugelhahns eines Ventils erfolgt mit hoher Genauigkeit über zahlreiche Umdrehungen der Antriebswelle des Elektromotors.

Beim Betrieb eines Lüftungs- oder Wasserleitungssystems ist es aus Sicherheitsgründen erforderlich, dass bei einem Stromausfall der Gas- oder Flüssigkeitsvolumenstrom unterbrochen wird, um Schäden an Gebäuden oder an Personen zu verhindern, d.h. die Klappen oder Ventile des Lüftungs-oder Wasserleitungssystems werden geschlossen.

Dies kann mit einer Rückholfeder erfolgen, welche beim Öffnen der Klappe oder dem Ventil durch den Elektromotor gespannt wird. Bei einem Stromausfall entfällt die Kraft des Elektromotors, worauf die Klappe oder das Ventil durch die Kraft der Rückholfeder geschlossen wird.

Wie in der WO 2007/134471 (Belimo) gezeigt ist, kann eine elektrische Sicherheitsschaltung vorgesehen sein, mit welcher bei vorhandener Stromversorgung ein Kondensator aufgeladen wird. Die Sicherheitsschaltung ist eingerichtet, um bei einem Stromausfall die im Kondensator gespeicherte Energie zum Schliessen der Klappe oder dem Ventil zu verwenden. Die Spannung oder die Kapazität können erhöht werden, indem mehrere Kondensatoren in Serieschaltung oder Parallelschaltung angeordnet werden.

Die US 2005/127854 (Siemens Corp.) zeigt eine Steuerung für einen ausfallsicheren Antrieb einer Lüftungsklappe oder eines Ventils in einem HLK-System. Das Ventil kann bei Stromausfall in eine offene, geschlossene oder mittlere Position gebracht werden. Die Energie, um das Ventil in die gewünschte Lage zu bringen, wird von einer Kapazität bereitgestellt. Die Verwendung eines elektrischen Antriebs und einer Kapazität erlaubt es, durch einfaches Konfigurieren bei Stromausfall eine Endposition oder auch eine Mittelposition anzufahren. Dies ist bei einer Feder nicht möglich. Gegenüber der Batterie hat der Kapazitätsspeicher den Vorteil geringerer technischer Komplexität und höherer Zuverlässigkeit.

Die US 5,744,923 (National Environmental Products) zeigt einen Luftklappenantrieb, welcher bei Stromausfall in eine Sicherheitsposition gefahren wird. Es ist eine "soft landing" Steuerung vorgesehen, damit der von der Kapazität betriebene Antrieb nicht ungebremst in die Sicherheitsposition fährt. In der Sicherheitsposition kann die Klappe eine offene, geschlossene oder mittlere Position einnehmen, je nach Vorgabe des An lagendesigners.

Mit dem Einstellen von Klappen oder Ventilen bei einem Stromausfall in eine offene, mittlere oder geschlossene Position wird ein Volumenstrom in einem Lüftungs- oder Wasserleitungssystem auf einen vorgegebenen Wert geregelt. Falls der Stromausfall im Zusammenhang mit einem Brand mit starker Rauchgasentwicklung steht, können Rauchgase bei geschlossenen Klappen nicht mehr über das Lüftungssystem abgeführt werden. Demgegenüber sind geschlossene Klappen günstig, um bei einem gleichzeitigen Stromausfall und Brand die Ausbreitung des Brands entlang eines Lüftungssystems zu verhindern. Das Regeln des Volumenstroms bei Stromausfall auf einen vorgegebenen Wert führt somit nicht immer zum optimalen Ergebnis und kann sogar im Gegenteil zu einer verstärkten Schädigung von Gebäuden und Personen führen.

Eine weitere gattungsgemäße Sicherheitssteuerung ist aus der GB 1367170 bekannt.

### Darstellung der Erfindung

Aufgabe der Erfindung ist es, ein dem eingangs genannten technischen Gebiet zugehörende Sicherheitssteuerung zu schaffen, welche bei Ereignissen wie einem Stromausfall flexibler anwendbar ist und die Schädigung von Gebäuden oder Personen so gering wie möglich hält.

Die Lösung der Aufgabe ist durch die Merkmale des Anspruchs 1 definiert. Gemäss der Erfindung ist eine Stellwertausgabeschaltung vorgesehen, welche einen eine Sicherheitsposition des Stellglieds definierenden Sicherheitsstellwert für das Stellglied ausgibt. Die Stellwertausgabeschaltung hat mindestens einen Eingang für ein variables Zustandssignal und ist ausgebildet, um den Sicherheitsstellwert in Abhängigkeit vom genannten Zustandssignal auf einen von mindestens zwei verschiedenen Stellwerten festzulegen.

Der Erfindung liegt somit der Gedanke zu Grund, dass die Sicherheitsposition abhängig von bestimmten Signalen festgelegt wird. Die Sicherheitsposition ist also nicht mehr fix vorgegeben, sondern wird adaptiv festgelegt entsprechend von im Lauf der Zeit sich ändernden Zuständen z.B. der Umgebung, der Anlage oder des Antriebs. Als Zustandssignal wird vorzugsweise ein physikalisch erfassbares (und in elektrische oder elektronische Form umgewandeltes) Signal verstanden. Ein Zustandssignal kann aber auch aus Steuer oder Kontrollgrössen der Anlage erzeugt sein. Wichtig ist, dass das Zustandssignal der Stellwertausgabeschaltung auf automatisierter Basis übergeben werden kann.

Die Stellwertausgabeschaltung enthält eine Logik (in Form von einer digitalen Schaltung, eines in einem Controller lauffähigen Datenverarbeitungsprogramms oder ähnlich), welche aufgrund des mindestens einen eingangsseitigen Zustandssignals und ev. weiterer Parameter einen Sicherheitsstellwert ausgibt, welcher mindestens zwei verschiedene Werte annehmen kann. Die zulässigen Werte können z.B. der Sicherheitsposition "offen" und "geschlossen" entsprechen oder auch einer dazwischen liegenden Position "halboffen".

Die Logik, nach welcher in Abhängigkeit von den erfassten Zustandssignalen der Sicherheitsstellwert ermittelt wird, hängt von den konkreten Umständen des Einsatzes der Lüftungsklappe bzw. der die Lüftungsklappen bedienenden Anlage ab. In der Regel wird die Logik nach dem Schwellwertprinzip arbeiten. Das heisst, dass der übliche Sicherheitsstellwert der geschlossenen Ventilposition entspricht, dass aber dann, wenn ein Zustandssignal einen vorgegebenen Schwellwert überschreitet, ein anderer Sicherheitsstellwert ausgegeben wird, welcher z.B. der offenen oder halboffenen Ventilposition entspricht. Es kann auch sein, dass mehrere Schwellwerte für verschiedene Zustandssignale kombiniert werden und dass erst dann ein vom üblichen Sicherheitsstellwert abweichender Stellwert ausgegeben wird, wenn mehrere Zustandssignale den für sie jeweils vorgesehenen Stellwert überschreiten.

Vorzugsweise umfasst die Sicherheitssteuerung einen Controller, welcher einen Eingang für ein Spannungsabfallsignal oder einen Detektor für einen Spannungsabfall einer externen Stromspeisungsschaltung aufweist, und welcher über einen Sicherheitsbetrieb verfügt, in welchem bei vorgegebenem Spannungsabfall das Stellglied mit Hilfe eines elektrischen Energiespeichers, insbesondere eines kapazitiven Energiespeichers, in die Sicherheitsposition gefahren wird, die dem durch die Stellwertausgabeschaltung ausgegebenen Sicherheitsstellwert entspricht. Der Controller ist typischerweise in einem elektronischen Bauteil integriert, welcher mit einem Mikroprozessor und allen üblichen Ein- und Ausgängen ausgestattet ist, um z.B. die Stromversorgung eines Antriebs zu überwachen und um den Antrieb bei Abfall der Versorgungsspannung mit Energie aus einem Kondensatorspeicher zu versorgen (vgl. WO 2007/134471). Auf diese Weise können die verbreitet eingesetzten Funktionseinheiten mit zusätzlichen Kontrolleigenschaften versehen werden, die nicht fest vorgegeben sein müssen, sondern nach Bedarf (d.h. adaptiv) genutzt bzw. aktiviert werden können.

Die Sicherheitssteuerung kann aber auch in einem separaten elektronischen Bauteil untergebracht sein, oder in einer Zentralsteuerung einer Anlage in Form einer Subroutine eines grösseren Computerprogramms implementiert sein.

Besonders bevorzugt ist es, die Sicherheitssteuerung (d.h. den mindestens einen Eingang für das variable Zustandssignal) mit einem Sensor zu verbinden, so dass der Sicherheitsstellwert in Abhängigkeit von einem Signal des Sensors auf einen der mindestens zwei verschiedenen Stellwerte festgelegt wird. Je nach Komplexität der Anlage und der Anforderungen an die Sicherheitssteuerung kann es nützlich sein, zwei, drei oder mehr Sensoren an die Sicherheitssteuerung anzuhängen.

Das Sensorsignal bezieht sich beispielsweise auf eine Temperatur- oder eine Rauchmessung. Je nach Standort der Klappe oder des Ventils, welche durch den Stellantrieb gesteuert oder geregelt wird, kann es erwünscht sein, dass bei einer bestimmten Temperatur- oder Rauchentwicklung und gleichzeitigem Stromausfall die Klappe oder das Ventil in eine bestimmte Stellung zu führen ist, also z.B. in eine Stellung bei welcher die Klappe oder das Ventil zu 10% geöffnet ist.

So kann eine sehr hohe Temperaturmessung und geringe Rauchentwicklung erfordern, dass die Klappe oder das Ventil bei einem Stromausfall vollständig oder teilweise zu schliessen ist, um die Ausbreitung eines Brands mit geringer Rauchgasentwicklung zu verhindern und einer Schädigung an Gebäuden oder Personen optimal vorzubeugen.

Andererseits kann eine hohe Rauchentwicklung erfordern, dass die Klappe oder das Ventil vollständig oder praktisch vollständig zu öffnen ist, um ein optimales Abführen von Rauchgasen und die Belüftung von Räumen zu gewährleisten.

Beim Ereignis eines Stromausfalls oder -abfalls, welcher bei einem Brand in einem Gebäude aufgrund von Zerstörungen oder von Löschwassereinwirkung eintreten kann, erfolgt die Energieversorgung des Stellantriebs im Sicherheitsbetrieb über die Sicherheitsschaltung und die Klappe oder das Ventil kann in diejenige Position gefahren werden, welche bei einer vorliegenden Gefahrenlage die Schädigung von Personen oder Gebäuden so klein wie möglich hält.

Im Normalbetrieb erfolgt die Energieversorgung des Stellantriebs über die Stromspeisungsschaltung, während im Sicherheitsbetrieb die Energieversorgung über die Sicherheitsschaltung erfolgt.

Das Sensorsignal kann kontinuierlich oder zu festlegbaren Zeitpunkten erfasst werden, um den Stellparameter entsprechend aktueller Messwerte nachzuführen, so dass im Falle eines Stromausfalls oder -abfalls schon der erforderliche Stellparameter ermittelt ist.

Nach einer weiteren Variante ist an dem Eingang für das Zustandssignal eine manuell betätigbare Einstellvorrichtung angeschlossen, so dass der Sicherheitsstellwert in Abhängigkeit von einer momentanen Stellung der Einstellvorrichtung festgelegt wird. Dazu kannz.B. ein Stellrad, eine Stellschraube ein oder mehrere Kippschalter vorgesehen sein. Dies kann insbesondere bei der Installation eines Stellantriebs erfolgen. So kann ein teilweises Öffnen erwünscht sein bei einer Klappe welche den Abluftstrom für einen Raum regelt oder ein vollständiges Schliessen bei einer Klappe welche den Luftstrom zwischen zwei Gebäuden regelt. Die manuell betätigbare Einstellvorrichtung kann direkt am Gehäuse des Antriebs oder der elektronischen Energieversorgung angebracht sein. Es ist aber auch denkbar, dass die Bedienelemente (Drehknopf etc.) distanziert zur Lüftungsklappe, z.B. einige Meter entfernt an einem gut zugänglichen Ort vorgesehen sind.

Eine weitere vorteilhafte Ausführungsvariante besteht darin, dass an dem Eingang für das Zustandssignal ein Anlagenparametermodul angeschlossen ist. Das genannte Anlagenparametermodul stellt Zustandsparameter der gesamten HLK-Anlage (mit ihrer Vielzahl von Lüftungsklappen) zur Verfügung, so dass der Sicherheitsstellwert in Abhängigkeit von mindestens einem Parameterwert der Anlagensteuereinheit festgelegt wird. Als Anlagenparameter kann z.B. der Umfang des Stromausfalls (total oder teilweise) die Zahl der aktiven Ventilatoren, die Anzahl der gerade geschlossenen oder offenen Lüftungsklappen sein, das gerade aktive jahreszeitspezifische Betriebsprogramm etc. sein.

Das Anlagenparametermodul wird in der Regel in der Zentralsteuereinheit vorhanden sein. Es kann aber auch dezentral (z.B. für eine lokale Gruppe von Ventilen) installiert sein. Wenn die Sicherheitssteuerung in der kapazitiven Stromversorgung integriert ist, wird der Kontakt zum Anlagenparametermodul über eine Datenübertragungsschnittstelle geschaffen.

Bei kleineren Anlagen, bei welchen die Stromversorgung z.B. nur ganz ausfällt oder gar nicht, kann auf die Verwendung von Anlagenparameterwerten verzichtet werden. Die vom Anlagenparametermodul bereitgestellten Zustandssignale werden in der Regel nicht auf Sensorwerte beruhen. Es ist aber nicht ausgeschlossen, dass, zur Ermittlung der Anlagenparameter auf Kontrollsensoren der Anlagensteuerung zurückgegriffen wird. _

Als Zustandssignal kann auch ein Parameter der Stromspeisungsschaltung, des elektrischen Energiespeichers, und/oder eines Betriebszustands einer benachbarten Systemkomponente, wie beispielsweise eines Systemventilators eines Heizungs-Lüftungssystems, um aufgrund dessen Sensorsignals den Stellparameter zu ermitteln und/oder den Sicherheitsbetrieb zu erstellen.

Je nach dem ob in einem Lüftungsrohr noch ein Ventilator in Betrieb ist oder nicht, kann die Klappe in eine Minimalposition eingestellt werden oder eben ganz geschlossen werden. Ein elektrischer Parameter eines elektrischen Energiespeichers, also z.B. eine nachlassende elektrische Spannung, kann eine nachlassende Kapazität des elektrischen Energiespeichers oder eine Überalterung anzeigen und die Klappe oder das Ventil kann in diesem Fall vorsichtshalber in eine dem Standort angepasste Position eingestellt werden.

Eine weitere Möglichkeit zur Nutzung der adaptiven Sicherheitssteuerung besteht darin, dass eine Datenschnittstelle für einen Zugang zu einem Server vorgesehen ist und dass der Sicherheitsstellwert in Abhängigkeit von mindestens einem Parameterwert des Servers festgelegt wird. Der Server kann z.B. über das Internet zugänglich sein und Sturmwarnungen oder Wetterprognosedaten zur Verfügung stellen.

Bevorzugt umfasst die Sicherheitsschaltung einen elektrischen, insbesondere einen kapazitiven Energiespeicher. Der Controller ist dann typischerweise in einem Mikroprozessor zur Steuerung des Energiespeichers integriert. Mit anderen Worten, die erfindungsgemässe Sicherheitsschaltung ist in einer Schalteinheit gemäss WO 2007/134471 eingebaut. Der elektrische Energiespeicher kann aber auch durch einen Akkumulator oder irgendeinen anderen elektrischen Energiespeicher gebildet sein.

Die Sicherheitsschaltung, der kapazitive Energiespeicher, ein Detektor für einen Spannungsabfall einer externen Stromspeisungsschaltung und ein Controller sind also vorzugsweise als bauliche Einheit ausgebildet, welche als Ganzes mit einem (z.B. in einem separaten Gehäuse untergebrachten) Stellantriebe elektrisch verbunden und mechanisch gekoppelt ("Huckepack-Anordnung") werden kann.

In einer Schaltungsvariante erfolgt die Energieversorgung auch ausserhalb des Sicherheitsbetriebs, also im Normalbetrieb, durch den elektrischen Energiespeicher, wobei dieser durch die Stromspeisungsschaltung ständig nachgeladen wird.

Alternativ umfasst die Sicherheitsschaltung einen mechanischen Energiespeicher wie z.B. eine Feder oder ein Schwungrad. Die mechanische Energie kann entweder direkt an die Klappe oder das Ventil übertragen werden, insbesondere bei der Feder, oder es kann eine Umwandlung der mechanischen Energie in elektrische Energie erfolgen, insbesondere beim Schwungrad. Im Falle einer direkten Übertragung der mechanischen Energie können elektrisch betätigbare Arretierungen vorgesehen sein, um im Sicherheitsbetrieb die Klappen- oder Ventilstellung zu definieren.

Die Sicherheitsschaltung kann auch in der Antriebssteuerung integriert sein. Wenn ein Ausfall der normalen Stromversorgung erfolgt, kennt der Antrieb seine Sicherheitsposition und wird in die gewünschte Stellung fahren, wenn er mit der Energie des z.B. kapazitiven Energiespeichers versorgt wird. Es kann auch der kapazitive Energiespeicher mit der Antriebssteuerung in einem gemeinsamen Gehäuse untergebracht sein, so dass eine Baueinheit (nämlich ein sogenannt integriertes Stellglied) zur Verfügung steht, welche vielfältig eingesetzt werden kann.

Bevorzugt ist ein Controller und/oder ein Zentralrechner vorgesehen, um mindestens ein Sensorsignal zu erfassen und den Stellparameter zu ermitteln.

Der Controller und/oder der Zentralrechner weist einen digitalen Prozessor zur Abarbeitung von Programmen (Softwaremodule) sowie analoge oder digitale Schnittstellen wie z.B. Analog/Digital Konverter oder eine Busschnittstelle auf, um die Sensorsignale zu erfassen und dem digitalen Prozessor zuzuführen.

Die Softwaremodule werten die erfassten Sensorsignale nach spezifischen Kriterien aus und legen den Stellparameter fest, welcher beispielsweise über eine digitale Schnittstelle an eine Motorensteuerung des Stellantriebs übertragen wird. Insbesondere im Falle des Controllers lässt sich ein Stellantrieb kostengünstig mit einer Sicherheitssteuerung ausrüsten.

Den Sensoren ist ein Datenübermittlungsmodul zugeordnet, um Sensorsignale an den Controller oder den Zentralrechner zu übermitteln. Es können drahtgebundene und/oder drahtlose Datenübermittlungsmodule vorgesehen sein, welche im Stand der Technik gemäss verschiedenen Standards wie beispielsweise USB, Ethernet, Bluetooth oder Wireless LAN bekannt sind.

Indem bei der Datenübermittlung zugleich eine Identifikation des Sensors übermittelt wird, kann aufgrund einer Standorttabelle der Sensoren und den aktuell gemessenen Sensorsignalen der Stellparameter festgelegt und an eine aktuelle Umgebung adaptiert werden, wobei dieser anschliessend über eine weitere Datenverbindung an einen Stellantrieb übermittelt wird. In einem Gebäude können eine Vielzahl Sensoren und Stellantriebe vorgesehen sein. Indem die Gebäudestruktur, die Installation von Wasser- und Lüftungsrohren sowie die Sensoren und Stellantriebe im Gebäude elektronisch erfasst werden, können bei gegebenen Messwerten der Sensoren verschiedene Szenarien durchgerechnet werden, also insbesondere ein Ausbreitungsszenario eines Brands und der Rauchgase für unterschiedliche Klappen- oder Ventilstellungen, und es können aus den berechneten Szenarien optimale Stellparameter festgelegt werden.

Vorzugsweise ist mindestens ein Sensor im Stellantrieb integriert und/oder mindestens ein Sensor extern vom Stellantrieb angeordnet.

Sensoren, welche in den Stellantrieb integriert sind, haben den Vorteil, dass keine Datenübertragungsvorrichtungen wie z.B. ein Kabel zwischen den Sensoren und dem Stellantrieb angeordnet werden müssen. Dies erleichtert die Montage des Stellantriebs.

Demgegenüber haben Sensoren, welche extern vom Stellantrieb angeordnet sind, den Vorteil, dass eine grössere Umgebung überwacht werden kann und Änderungen in der Umgebung, welche für einen Stellantrieb relevant sind, früher erkannt werden können. Die Verwendung von externen Sensoren erlaubt auch eine modulares Systemkonzept: An eine Sicherheitssteuerung können nach Bedarf unterschiedliche Sensoren angeschlossen werden. Sensoren können auch leichter ersetzt oder ausgetauscht werden.

Vorzugsweise ist mindestens ein Sensor zur Erfassung von chemischen und/oder physikalischen Messwerten vorgesehen, wobei der Sensor insbesondere ein Gassensor, ein Rauchsensor, ein Temperatursensor, ein Luftdrucksensor und/oder ein Strömungssensor ist, um aufgrund dessen Sensorsignals den Stellparameter zu ermitteln und/oder den Sicherheitsbetrieb zu erstellen.

Aufgrund solcher Sensoren lässt sich die Dynamik eines (möglichen) Brands in einem Gebäude sehr genau voraussagen und (sofern er eintritt) erfassen und verfolgen, sodass Stellparameter von Stellantrieben präziser festgelegt werden können. So können insbesondere die Aussen- und die Innentemperatur eines Gebäudes mitberücksichtigt werden, welche die Dynamik wesentlich beeinflussen können.

Bevorzugt ist das Ermittlungsmodul eingerichtet, den Stellparameter dynamisch zu ermitteln, insbesondere nach Ablauf eines bestimmbaren Zeitintervalls oder aufgrund von erfassten Sensorsignalen. Somit ist bei einem Stromausfall ein Stellparameter ermittelt, welcher der aktuellen Situation in einem Gebäude optimal entspricht, womit die Schädigung von Personen oder Gebäuden minimiert wird.

Die Stromversorgung des Stellantriebs und des Controllers erfolgt im Normalbetrieb über die Stromspeisungsschaltung. Im Sicherheitsbetrieb übernimmt die Sicherheitsschaltung die Stromversorgung des Stellantriebs und des Controllers. Bis zu einem Stromausfall oder -abfall der Stromversorgung können somit die verschiedenen Sensorsignale erfasst und ausgewertet werden, um den Stellparameter zu ermitteln, beispielsweise regelmässig nach Ablauf eines Zeitintervalls. Die Nachführung des Stellparameters und somit die Klappen- oder Ventilstellung lässt sich bei Bedarf solange weiterführen, als der elektrische Energiespeicher ausreicht, um den Controller und den Stellantrieb mit Strom zu versorgen. Somit kann eine optimale Klappenstellung zur Vermeidung von Schädigungen an Personen oder Gebäuden über einen längeren Zeitraum sichergestellt werden.

Die Festlegung des Stellparameters kann beim Erstellen des Sicherheitsbetriebs ausgelöst werden. Dadurch ist gewährleistet, dass die Klappe aufgrund einer aktuellen Gefahrenlage eingestellt wird.

Vorzugsweise ist ein Zeitmodul vorgesehen, um den Stellparameter zeitabhängig zu ermitteln, insbesondere abhängig von der Tageszeit, vom Wochentag und/oder von der Jahreszeit. So kann es erforderlich sein, dass beispielsweise in einer Fabrikhalle mit einem Maschinenpark während dem Tagbetrieb oder dem Nacht- respektive Wochenendbetrieb unterschiedliche Stellparameter erforderlich sind, da beispielsweise das Schliessen von Klappen bei Vollbetrieb der Maschinen während dem Tag zu einer Überhitzung des Maschinenparks und somit einer erhöhten Brandgefahr führen kann. Während einer typischerweise trockenen Jahreszeit wie dem Herbst kann es ferner notwendig sein die Stellparameter so zu ermitteln, dass ein Übergreifen auf ein Nebenhaus statt auf einen naheliegenden Wald in Kauf genommen werden muss, um die Schädigung von Personen oder Gebäuden zu minimieren, da durch ein Waldbrand umliegende Dörfer gefährdet sein können.

Gemäss einer weiteren Ausführungsvariante weist die Sicherheitssteuerung eine Verzögerungsschaltung auf, um bei Abfall oder Wegfall der Stromspeisungsschaltung erst nach einer (vorgegebenen) Verzögerungszeit in den Sicherheitsbetrieb überzugehen. Die Verzögerungszeit kann ein Vielfaches der normalen Reaktionszeit sein, beispielsweise beträgt sie z.B. mindestens eine Sekunde. So können kurze Stromversorgungsunterbrüche von bis zu einigen Sekunden überbrückt werden, ohne dass der Sicherheitsbetrieb erstellt wird und die Klappen unnötigerweise umgestellt werden. Alternativ kann die Sicherheitssteuerung eingerichtet sein, dass beim Eintreten des Ereignisses der Sicherheitsbetrieb unmittelbar erstellt wird, wobei eine manuell zu betätigende Rückstellvorrichtung vorgesehen ist, um die Sicherheitssteuerung vom Sicherheitsbetrieb in den Normalbetrieb zurückzustellen. Gleichzeitig kann zu bestätigen sein, dass die Klappenstellung korrekt eingestellt ist. Dadurch wird insbesondere erzwungen, dass bei einem Vorfall, welcher zum Sicherheitsbetrieb führt, die Funktionstüchtigkeit der Sicherheitssteuerung kontrolliert wird.

Die Erfindung ermöglicht eine funktionelle Flexibilisierung von bestehenden Anlagen für die Steuerung und/oder Regelung von Heizung-Lüftung-Klima (HLK) und/oder für den Brand- und/oder Raumschutz. Es braucht mindestens einen Stellantrieb (vorzugsweise mehrere) und eine von diesem angetriebene Klappe oder ein Ventil zur Steuerung oder Regelung eines Gas- oder Flüssigkeitsstroms (bzw. mehrere Klappen oder Ventile). Die erfindungsgemässe Sicherheitssteuerung der zuvor beschriebenen Art kann in den Stellantrieben, in den Sicherheitsschaltungen oder auch in der Zentralsteuerung der Anlage untergebracht sein. Insbesondere sind Mischmodelle möglich, bei welchen z.B. gewisse Antriebe eine integrierte Sicherheitssteuerung aufweisen, andere aber nicht. Ebenso können gewisse Sicherheitsschaltungen (welche für die lokale Energieversorgung bei Stromausfall bereit stehen) eine Sicherheitssteuerung der erfindungsgemässen Art aufweisen und andere nicht. Auch kann die Sicherheitssteuerung direkt in der zentralen Anlagensteuerung integriert sein.

Vorzugsweise ist in der Anlage mindestens ein Sensor extern vom Stellantrieb vorgesehen, dessen Signal für die Festlegung des Sicherheitsstellwerts gemäss der Erfindung mitberücksichtigt wird.

Insbesondere wenn die Sicherheitssteuerung in der zentralen Anlagensteuerung untergebracht ist, ist es sehr einfach, an einem Eingang der Sicherheitssteuerung ein Ausgang des Anlagenparametermoduls anzuschliessen, so dass der Sicherheitsstellwert in Abhängigkeit von mindestens einem Anlagenparameterwert festgelegt wird. Dieser kann ein Druckwert, ein Temperaturwert, ein Strömungswert oder auch ein errechneter Wert sein.

Die Erfindung kann auch durch ein Verfahren zum Betreiben einer Anlage für die Steuerung und/oder Regelung von Heizung-Lüftung-Klima (HLK) und/oder für den Brand- und/oder Raumschutz verwirklicht werden mit folgenden Schritten:
a) Erfassen eines Zustandssignals;
b) Festlegen des Sicherheitsstellwerts in Abhängigkeit vom Zustandssignal auf einen von mindestens zwei verschiedenen Stellwerten;
c) Festlegen des Sicherheitsstellwerts auf einen anderen der mindestens zwei verschiedenen Stellwerte, wenn das Zustandssignal eines gewissen vorgegebenen Schwellwert überschreitet;
d) Detektieren eines Abfalls oder Ausfalls einer Stromeinspeisung und
e) Bei Bedarf Auslösen eines Sicherheitsbetriebs, in welchem eine Sicherheitsposition des Stellglieds entsprechend dem Sicherheitsstellwert angefahren wird.

Sofern ein (optionales) Zeitverzögerungsmodul der weiter oben beschriebenen Art vorgesehen ist, kann es sein, dass das Auslösen des Sicherheitsbetriebs nicht zwingend bzw. nicht in jedem Fall erfolgt, sondern nur bei Bedarf (also wenn die Verzögerungszeit abgelaufen ist bevor die ordentliche Stromversorgung über das Netz wieder läuft).

Vorzugsweise erfolgt das Erfassen des Zustandssignals und das Festlegen des Sicherheitsstellwerts in einem Normalbetrieb der Anlage. Auf diese Weise wird sichergestellt, dass bei Stromausfall durch einen einfachen und sicheren Verfahrensablauf die Anlage in den Sicherheitsbetrieb übergehen kann.

Wenn die Sicherheitsposition des Ventils oder der Klappe von Parametem abhängen soll, die gerade beim Stromausfall gegeben sind, dann ist es nötig, die entsprechenden Parameter in Echtzeit zu ermitteln und daraus den Sicherheitsstellwert zu errechnen bzw. zu bestimmen. Bevorzugte Ausführungsformen des Verfahrens ergeben sich aus einem oder mehreren der oben dargestellten Ausführungsformen der Sicherheitssteuerung.

Die Erfindung kann auch in Form eines Computerprogrammprodukts verwirklicht sein, d.h. einer Software, welche das beschriebene Verfahren durchführt, wenn es in einem Zentralrechner oder in einem Mikroprozessor einer Sicherheitsschaltung oder einer Antriebssteuerung geladen ist.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen schematisch:
- Fig. 1: eine HLK-Anlage mit einer erfindungsgemässe Sicherheitssteuerung;
- Fig. 2: eine Sicherheitssteuerung für mehrere Zustandssignale;
- Fig. 3: eine Sicherheitsschaltung mit kapazitivem Energiespeicher und einer Sicherheitssteuerung; und
- Fig. 4: ein Flussdiagram zur Festlegung eines Stellparameters.

Grundsätzlich sind in den Figuren gleiche Teile mit gleichen Bezugszeichen versehen.

### Wege zur Ausführung der Erfindung

Die nachfolgend dargestellte Ausführung der Erfindung bezieht sich auf eine Klappe zur Regelung eines Gasstroms in einem Lüftungskanal. Sie lässt sich ohne weiteres auf ein Ventil zur Regelung eines Flüssigkeitsstroms in einem Flüssigkeitsrohr übertragen respektive analog anwenden. Eine Vorrichtung zur Regelung eines Luftstroms ist aus der EP 2 052 191 (Belimo) bekannt. Ein Kugelhahn zur Regelung eines Flüssigkeitsstroms ist beispielsweise aus der EP 1 924 793 (Belimo) bekannt. Solche Anlagen bzw. Vorrichtungen können mit der erfindungsgemässen Steuerung versehen werden.

Die Klappe 3 ist innerhalb des Lüftungskanals 4 angeordnet und ist beispielsweise um eine Achse drehbar, sodass durch die Drehung der Klappe 3 der Gasstrom im Lüftungskanal 4 gedrosselt werden kann. Je nach Stellung kann mit der Klappe 3 der Gasstrom im Lüftungskanal 4 ganz freigegeben oder teilweise bis ganz unterbunden werden, d.h. die Klappe 3 kann von einer maximalen Öffnung von 100% bis zu einem vollständigen Verschluss eingestellt werden. Damit ist eine Einstellung des Luftstroms in einem Heizungs- oder Lüftungssystem ermöglicht, um das Zu- oder Abführen von beispielsweise Frischluft, Warmluft oder Abluft zu regeln.

Die nachfolgend erwähnten Module können im Allgemeinen als integrierte Bauelemente, d.h. als ASIC, oder als auf einem Prozessor ablauffähiges Softwareprogramm ausgeführt sein.

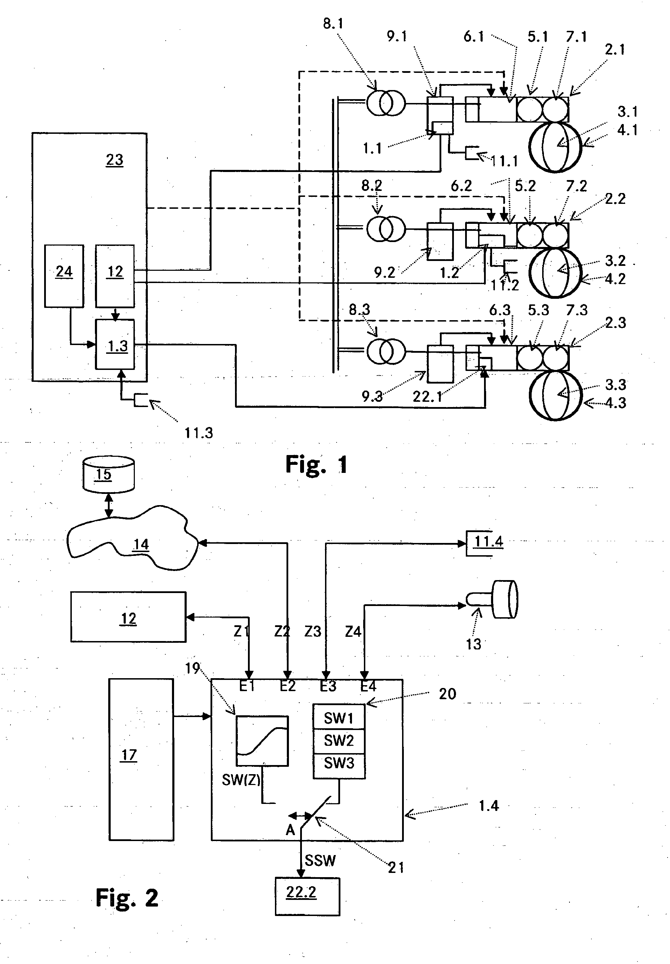

Fig. 1 zeigt ein Schaltungsschema einer HLK-Anlage mit mehreren Lüftungskanälen 4.1, 4.2, 4.3, in welchen der Durchfluss der Luft durch Klappen 3.1, 3.2, 3.3 an sich bekannter Bauart kontrolliert und geregelt wird. Die Klappen 3.1, 3.2, 3.3 werden je durch einen Stellantrieb 2.1, 2.2, 2.3 betätigt. Jeder Stellantrieb 2.1, 2.2, 2.3 umfasst einen Elektromotor 5.1, 5.2, 5.3 und ein untersetzendes Getriebe 7.1, 7.2. 7.3. Die Motorensteuerungen 6.1, 6.2, 6.3, welche vorzugsweise mit Elektromotor und Getriebe in einem gemeinsamen Gehäuse untergebracht sind, sind elektrisch mit einer Stromspeisungsschaltung 8.1, 8.2, 8.3 verbunden, welche am allgemeinen Stromnetz angehängt sind und im Normalbetrieb die elektrische Energie zum Betreiben der Stellantriebe 2.1, 2.2, 2.3 bereit stellen. Zwischen der Stromspeisungsschaltung 8.1, 8.2, 8.3 und dem Stellantrieb 2.1, 2.2, 2.3 ist jeweils eine Sicherheitsschaltung 9.1, 9.2, 9.3 eingesetzt, welche bei Stromabfall oder Stromausfall der Stromspeisungsschaltung 8.1, 8.2, 8.3 die nötige Reserveenergie zur Verfügung stellen, um die Klappe in die Sicherheitsposition zu fahren. Die Sicherheitsschaltungen 9.1, 9.2, 9.3 können vorbehaltlich einer erfindungsgemässen Anpassung (wie sie in Fig. 1 bei 9.3 angedeutet ist und wie sie nachfolgend erläutert wird) wie in der WO 2007/134471 beschrieben ausgeführt sein.

Für die Steuerung und Regelung im Normalbetrieb ist eine Anlagensteuereinheit 23 vorgesehen, welche steuerungstechnisch mit der Motorensteuerung 6.1, 6.2, 6.3 verbunden ist (gestrichelte Linie).

In Fig. 1 sind drei verschiedene Ausführungsvarianten der Erfindung dargestellt. Bei einer ersten Variante ist die Stellwertausgabeschaltung 1.1 in der Sicherheitsschaltung 9.1 untergebracht. Wie aus Fig. 1 ersichtlich ist, kann die Stellwertausgabeschaltung 1.1 mit einem Anlagenparametermodul 12, welches in der zentralen Anlagensteuereinheit 23 integriert ist, und mit einem lokalen Sensor 11.1 verbunden sein. Die Stellwertausgabeschaltung 1.1 hat in diesem Beispiel also zwei Eingänge, an welchen Zustandssignale (Anlagenpararameterwerte, Sensorwerte) anliegen.

Bei einer zweiten Variante ist die in der Stellwertausgabeschaltung 1.2 in der Motorensteuerung 6.2 integriert. Auch hier ist als weiterer Eingang ein Signal eines Sensors 11.2 vorgesehen. Die Sicherheitsschaltung 9.2 kann bei dieser Variante in konventioneller Weise ausgeführt sein.

In der dritten Variante ist die Stellwertausgabeschaltung 1.3 in der zentralen Anlagensteuereinheit 23 enthalten. Der Sensor 11.3, dessen Signal für die Ermittlung des Sicherheitsstellwertes herangezogen wird, ist mit der Anlagensteuereinheit 23 und genau gesagt mit der Stellwertausgabeschaltung 1.3 verbunden. Die Motorensteuerung 6.3 hat nur einen lokalen Sicherheitsstellwertspeicher, auf welchen bei Stromausfall zugegriffen werden kann. Die Stellwertausgabeschaltung 1.3 liefert z.B. in regelmässigen Zeitabständen den aktuellen Sicherheitsstellwert (wobei der zuvor gespeicherte Wert gelöscht wird). Bei Stromausfall braucht die Datenverbindung zur zentralen Anlagensteuereinheit 23 nicht funktionstüchtig zu sein, weil ja der zuletzt übertragene Sicherheitsstellwert im Sicherheitsstellwertspeicher 22.1 vorhanden ist.

Wenn die Versorgungsspannung zusammenbricht und die Sicherheitsschaltungen 9.1, 9.2, 9.3 dies detektieren und das Signal für den Sicherheitsbetrieb geben, dann fährt jede Motorensteuerung 6.1, 6.2, 6.3 die zugehörige Klappe 3.1, 3.2, 3.3 in die Sicherheitsposition, welche durch den Sicherheitsstellwert gegeben ist. Die drei schematisch dargestellten Klappen 3.1, 3.2, 3.3 brauchen nicht in die gleiche Sicherheitsposition zu gehen.

Fig. 2 zeigt eine mögliche Ausführungsform einer erfindungsgemässen Sicherheitssteuerung 1.4.

Es sind z.B. vier Eingänge E1, E4 für Zustandssignale Z1, ..., Z4 vorgesehen. Das Zustandssignal Z1 wird z.B. von dem Anlagenparametermodul 12 geliefert. Das Zustandssignal Z2 wird z.B. über das Datennetzwerk 14 (Internet, Intranet) von einem Server 15 übertragen. Das Zustandssignal Z3 wird z.B. von einem Sensor 11.4 geliefert und das Zustandssignal Z4 ergibt sich durch eine Abfrage des manuell einstellbaren Potenziometers 13.

Die Zustandssignale Z1,...,Z4 werden je nach Ausgestaltung der Sicherheitssteuerung 1.4 auf ein Berechnungsmodul 19 oder ein Tabellenmodul 20 geführt. Diese beiden Module ermitteln nach einem anwendungsspezifischen Algorithmus den Sicherheitsstellwert SSW, sei es nun, dass nach einer bestimmten Formel SW(Z) ein Wert berechnet oder nach bestimmten Kriterien ein Wert aus einer Tabelle SW1, SW2, SW3 ausgelesen wird.

Es kann ein Selektor 21 vorgesehen sein, welcher so eingestellt ist, dass je nach den Erfordernissen der berechnete Wert als Sicherheitsstellwert oder der aus der Tabelle gelesene Wert am Ausgang A ausgegeben wird. (In der Regel ist entweder ein Berechnungsmodul 19 oder ein Tabellenmodul 20 vorgesehen und der Selektor 21 erübrigt sich.) Der Sicherheitsstellwert SSW wird in einem Sicherheitsstellwertspeicher 22.2 abgespeichert.

In Fig. 2 ist weiter ein Zeitmodul 17 dargestellt. Dieses dient dazu, eine Abfrage der Zustandssignale zu einem bestimmten (vorprogrammierten oder periodischen) Zeitpunkt anzustossen.

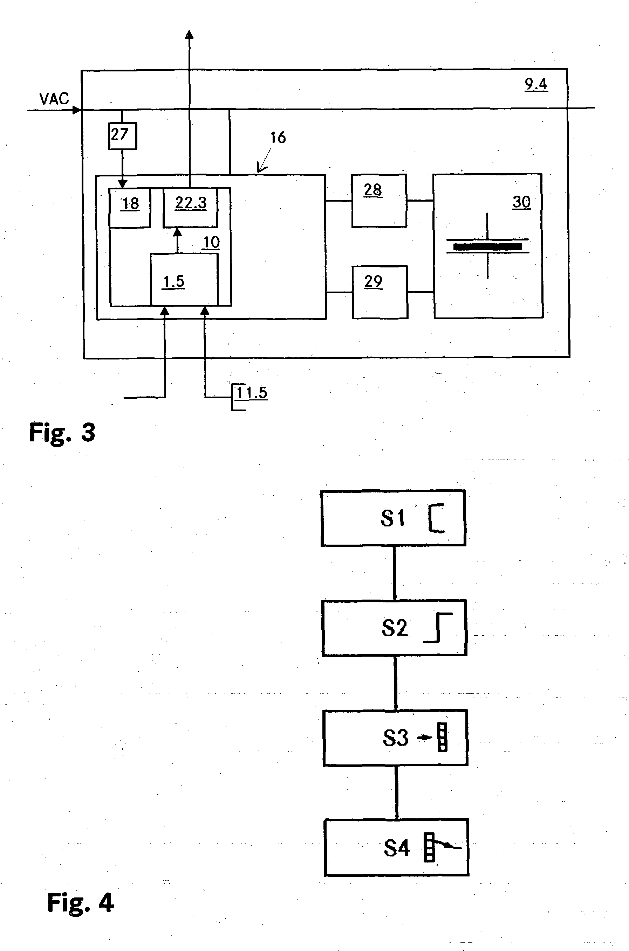

In Fig. 3 ist ein Schema einer Sicherheitsschaltung 9.4 gezeigt, welches sich durch eine erfindungsgemässe Veränderung bzw. Anpassung der Schaltungsanordnung gemäss WO 2007/134471 ergibt.

Ein Mikroprozessor 16 steuert einen Energiewandler 28 und eine Überwachungseinheit 29 eines kapazitiven Energiespeichers 30 (mit einem oder mehreren Supercaps). Das heisst, der Mikroprozessor 16 sorgt dafür, dass der Energiespeicher 30 bei Normalbetrieb in geladenem Zustand ist. Bei Abfall der normalen Stromversorgungsspannung sorgt der Mikroprozessor 16 dafür, dass der Strom aus dem kapazitiven Energiespeicher 30 dem Stellantrieb 2.1 (Fig. 1) zugeführt wird, so dass die Klappe in die abgespeicherte Sicherheitsposition gefahren werden kann.

Am Mikroprozessor 16 ist ein Detektor 27 für den Spannungsabfall angeschlossen. Spricht dieser Detektor 27 an, wird das (im Sinn einer Ausführungsvariante vorgesehene) Verzögerungsmodul 18 aktiviert. Bleibt das Signal für den Spannungsabfall während einer vorgegebenen Dauer T₀ (z.B. 5 Sekunden) bestehen, wird der Controller 10 dahingehend aktiv, dass er den Sicherheitsbetrieb auslöst. Ist die Stromausfalldauer kürzer als die vorgegebene Dauer T₀, bleibt der Controller 10 im Normalbetrieb.

Im Sicherheitsbetrieb überträgt der Controller den im Sicherheitsstellwertspeicher 22.3 abgespeicherten Sicherheitsstellwert SSW an die Motorensteuerung und überträgt die im kapazitiven Energiespeicher 30 enthaltene Energie, damit die Motorensteuerung den erhaltenen Befehl ausführen und die Klappe in die Sicherheitsposition fahren kann.

Gemäss einer Ausführungsvariante kann auch vorgesehen sein, dass die Stellwertausgabeschaltung 1.5 den Sicherheitsstellwert SSW erst dann ermittelt, wenn der Controller 10 in den Sicherheitsbetrieb übergeht. Es wird dann das Signal des Sensors 11.5 und ev. ein weiteres Zustandssignal verwendet, um den Sicherheitsstellwert zu berechnen.

Die Stromspeisungsschaltung 8.1, 8.2, 8.3, beispielsweise eine 230 V oder 110 V AC Netzstromeinspeisung oder eine 24 V oder 72 V AC oder DC Stromeinspeisung, kann direkt beim Stellantrieb 2.1, 2.2, 2.3 angeordnet sein oder zentral im Gebäude, in welchem die Heizungs- oder Lüftungsanlage installiert ist.

Die Übermittlung von Sensorsignalen von den Sensoren auf den Zentralrechner kann insbesondere über digitale Kommunikationsverbindungen wie beispielsweise ein Ethernet oder ein Wireless LAN erfolgen. Es ist prinzipiell auch denkbar eine unidirektionale digitale Datenverbindung, entweder drahtgebunden oder drahtlos, zu verwenden, um die gemessenen Sensorwerte an den Zentralrechner zu übermitteln.

Der Zentralrechner kann durch irgendein Computersystem gebildet sein und ein Erfassungsmodul sowie ein Ermittlungsmodul umfassen, um eine auf Sensorsignalen oder Anlagenparametern basierte Ermittlung des Sicherheitsstellwerts durchzuführen. Es kann ein Brandausbreitungsmodul 24 vorgesehen sein, um aufgrund einer elektronisch erfassten Gebäudebeschreibung, also insbesondere aufgrund der Raumgeometrie und der Anordnung der Lüftungsanlage, die Ausbreitung eines Brandes oder des Rauchgases abzuschätzen, indem diese verschiedenen Szenarien berechnet werden. Nachdem eine aktuelle Brandsituation von den Sensoren ermittelt ist, kann beispielsweise in einem ersten, zweiten und dritten Szenario der Sicherheitsstellwert des Stellantriebs 2.1 als vollständig geschlossen, halb offen und ganz offen sowie der verbleibenden Stellantriebe 2.2, 2.3 als vollständig geschlossen angenommen werden und die Ausbreitung des Brands und der Rauchgase kann durch das Brandausbreitungsmodul 24 für zukünftige Zeitintervalle rechnerisch bestimmt werden. In weiteren Szenarien können die Stellantriebe 2.2, 2.3 nacheinander ebenfalls als halb offen und ganz offen angenommen werden und die Brandausbreitung mit dem Brandausbreitungsmodul 24 bestimmt werden. Aus den so ermittelten Szenarien wird schliesslich dasjenige mit den geringsten zu erwartenden Schädigungen an Personen oder Gebäuden ausgewählt und die Sicherheitsstellwerte der Stellantriebe 2.1, 2.2, 2.3 werden dementsprechend festgelegt.

Der Zentralrechner kann ferner ein Zeitmodul umfassen sinngemäss zur Ausführungsform der Fig. 3.

Fig. 4 zeigt schematisch ein Flussdiagramm eines Softwaremoduls mit den wesentlichsten Schritten zur Festlegung des Sicherheitsstellwerts. Wie erwähnt kann dies im Normalbetrieb erfolgen, nachdem zu einem Erfassungszeitpunkt neue Sensorsignale der Sensoren 11.1, 11.2, 11.3 erfasst wurden, es kann bei der Erstellung (also zu Beginn) des Sicherheitsbetriebs erfolgen oder es kann zu einem Erfassungszeitpunkt nach dem Beginn des Sicherheitsbetriebs erfolgen.

Im Schritt S1 werden Sensorsignale der Sensoren 11.1, 11.2, 11.3, von der Stellwertausgabeschaltung 1.4 (Fig. 2) erfasst und in einem Arbeitsspeicher des Mikroprozessors abgespeichert. Die Sensorsignale können quasi kontinuierlich erfasst werden, indem diese mit einer hohen Abtastfrequenz von beispielsweise einigen 100 Hz erfasst werden. Für viele Anwendungen ist es ausreichend, die Sensorsignale in Zeitintervallen von einigen Minuten oder Stunden abzuspeichern. Die Abspeicherung kann sich nur auf den aktuellsten Wert beziehen oder es kann in Tabellenstruktur eine Zeitreihe erfasst werden.

Im Schritt S2 werden die abgespeicherten Sensorsignale zur Ermittlung des Sicherheitsstellwerts ausgewertet. Es kann auch eine Schätzung einer zukünftigen Entwicklung der Sensorsignale und damit der Schädigung an Gebäuden und Personen durchgeführt werden. Falls ein Sensorsignal einen in einer Vergleichstabelle abgespeicherten Schwellwert überschreitet, also z.B. eine Temperaturmessung eine grosse Hitze anzeigt, dann kann dies erfordern, dass bei Erstellung des Sicherheitsbetriebs bestimmte Stellantriebe 2.1, 2.2, ..., 2.3 auf eine geschlossene oder vorwiegend geschlossene Stellung einzustellen sind, um die Ausbreitung eines Brandes zu verhindern. Durch die Berechnung der zukünftigen Entwicklung der Sensorsignale kann beispielsweise ermittelt werden, auf welche Position die Klappe einzustellen ist, also ob beispielsweise eine Öffnung von 10% oder eine von 70% einzustellen ist.

Im Schritt S3 werden die Sicherheitsstellwerte der verschiedenen Stellantriebe z.B. in einer Vektorstruktur abgespeichert.

Im Schritt S4 werden die Sicherheitsstellwerte der Vektorstruktur an die einzelnen Stellantriebe 2.1, 2.2, 2.3 übermittelt. Dies erfolgt bevorzugt unmittelbar nachdem die genannten Werte ermittelt worden sind, so dass stets aktualisierte Werte in den Stellantrieben vorliegen.

Zusammenfassend ist festzustellen, dass die erfindungsgemässe Sicherheitssteuerung bei Ereignissen wie einem Stromausfall flexibler anwendbar ist und die Schädigung von Gebäuden oder Personen so gering wie möglich hält.

## Patentansprüche

1. Sicherheitssteuerung für ein Stellglied,
insbesondere für ein Stellglied mit einem Stellantrieb (2.1, 2.2, 2.3) mit einer Klappe (3.1, 3.2, 3.3) oder einem Ventil zur Steuerung oder Regelung eines Gas- oder Flüssigkeitsstroms,
insbesondere zur Verwendung in einer Anlage für Heizung-Lüftung-Klima (HLK), Brand- und/oder Raumschutz,
mit einer Stellwertausgabeschaltung (1.1, 1.2, 1.3), welche einen eine Sicherheitsposition des Stellglieds definierenden Sicherheitsstellwert (SSW) für das Stellglied ausgibt,
wobei die Stellwertausgabeschaltung (1.1, 1.2, 1.3) mindestens einen Eingang (E1, ..., E4) für ein variables Zustandssignal aufweist und wobei die Stellwertausgabeschaltung (1.1, 1.2, 1.3) ausgebildet ist, um den Sicherheitsstellwert (SSW) in Abhängigkeit vom genannten Zustandssignal auf einen von mindestens zwei verschiedenen Stellwerten (SW1, SW2, ...) festzulegen,
**dadurch gekennzeichnet, dass**
die Stellwertausgabeschaltung (1.1, 1.2, 1.3) derart ausgebildet ist, dass bei Überschreitung eines gewissen vorgegebenen Schwellwerts des mindestens einen variablen Zustandssignals der Sicherheitsstellwert (SSW) auf einen anderen der mindestens zwei verschiedenen Stellwerten (SW1, SW2, ...) festlegt wird.

2. Sicherheitssteuerung nach Anspruch 1, **dadurch gekennzeichnet, dass** sie einen Controller (10) umfasst, welcher einen Eingang für ein Spannungsabfallsignal oder einen Detektor für einen Spannungsabfall einer externen Stromspeisungsschaltung (8.1, 8.2, 8.3) umfasst, und welcher über einen Sicherheitsbetrieb verfügt, in welchem bei vorgegebenem Spannungsabfall das Stellglied (2.1, 2.2, 2.3) mit Hilfe eines elektrischen Energiespeichers (30), insbesondere eines kapazitiven Energiespeichers, in die Sicherheitsposition gefahren wird, die dem durch die Stellwertausgabeschaltung (1.1, 1.2, 1.3) ausgegebenen Sicherheitsstellwert (SSW) entspricht.

3. Sicherheitssteuerung nach Anspruch 1 oder 2, **dadurch gekennzeichnet, dass** sie einen Sensor (11.4) umfasst, welcher mit dem mindestens einen Eingang (E3) für das variable Zustandssignal in Verbindung steht, so dass der Sicherheitsstellwert (SSW) in Abhängigkeit von einem Signal des Sensors (11.4) auf einen der mindestens zwei verschiedenen Stellwerte (SW1, SW2, ...) festgelegt wird.

4. Sicherheitssteuerung nach einem der Ansprüche 1 bis 3, **dadurch gekennzeichnet, dass** an dem Eingang (E1) für das Zustandssignal ein Anlagenparametermodul (12) angeschlossen ist, so dass der Sicherheitsstellwert in Abhängigkeit von mindestens einem Parameterwert der Anlagensteuereinheit (12) festgelegt wird.

5. Sicherheitssteuerung nach einem der Ansprüche 1 bis 4, **dadurch gekennzeichnet, dass** an dem Eingang (E4) für das Zustandssignal eine manuell betätigbare Einstellvorrichtung (13) angeschlossen ist, so dass der Sicherheitsstellwert in Abhängigkeit von einer momentanen Stellung der Einstellvorrichtung (13) festgelegt wird.

6. Sicherheitssteuerung nach einem der Ansprüche 1 bis 5, **dadurch gekennzeichnet, dass** sie eine Datenschnittstelle (E2) für einen Zugang zu einem Server (15) aufweist und dass der Sicherheitsstellwert in Abhängigkeit von mindestens einem Parameterwert des Servers (15) festgelegt wird.

7. Sicherheitssteuerung nach einem der Ansprüche 2 bis 6, **dadurch gekennzeichnet, dass** sie einen kapazitiven Energiespeicher (30) umfasst und dass der Controller (10) in einem Mikroprozessor (16) zur Steuerung des Energiespeichers (30) integriert ist.

8. Sicherheitssteuerung nach einem der Ansprüche 2 bis 7, **dadurch gekennzeichnet, dass** sie eine Antriebssteuerung (6.3) umfasst.

9. Sicherheitssteuerung nach einem der Ansprüche 3 bis 8, **dadurch gekennzeichnet, dass** der Sensor (11.1, 11.2, 11.3) ein Gassensor, ein Rauchsensor, ein Temperatursensor, ein Luftdrucksensor und/oder ein Strömungssensor ist.

10. Sicherheitssteuerung nach einem der Ansprüche 1 bis 9, **dadurch gekennzeichnet, dass** ein Zeitmodul (17) vorgesehen ist, um den Sicherheitsstellwert (SSW) zeitabhängig zu ermitteln, insbesondere abhängig von der Tageszeit, vom Wochentag und/oder von der Jahreszeit.

11. Sicherheitssteuerung nach einem der Ansprüche 1 bis 10, **dadurch gekennzeichnet, dass** sie eine Verzögerungsschaltung (18) aufweist, um bei Abfall oder Wegfall der Stromspeisungsschaltung (8) erst nach einer Verzögerungszeit in den Sicherheitsbetrieb überzugehen.

12. Stellglied mit einem Stellantrieb (2.1, 2.2, 2.3) zum Positionieren einer Klappe (3.1, 3:2, 3.3) oder eines Ventils zur Steuerung oder Regelung eines Gas- oder Flüssigkeitsstroms, insbesondere zur Verwendung in einer Anlage für Heizung-Lüftung-Klima (HLK), Brand- und/oder Raumschutz, **gekennzeichnet durch** eine Sicherheitssteuerung nach einem der Ansprüche 1 bis 11.

13. Sicherheitsschaltung (1.4) mit einem kapazitiven Energiespeicher (30), einem Detektor (27) für einen Spannungsabfall einer externen Stromspeisungsschaltung (8.1, 8.2, 8.3) und einem Controller (10), **gekennzeichnet durch** eine Sicherheitssteuerung nach einem der Ansprüche 1 bis 11.

14. Anlage für die Steuerung und/oder Regelung von Heizung-Lüftung-Klima (HLK) und/oder für den Brand- und/oder Raumschutz, mit mindestens einem Stellantrieb (2.1, 2.2, 2.3) und einer von diesem angetriebenen Klappe (3.1, 3.2, 3.3) oder einem Ventil zur Steuerung oder Regelung eines Gas- oder Flüssigkeitsstroms, **gekennzeichnet durch** eine Sicherheitssteuerung nach einem der Ansprüche 1 bis 11.

15. Anlage nach Anspruch 14, **dadurch gekennzeichnet, dass** sie mindestens einen Sensor (11.1, 11.2, 11.3) extern vom Stellantrieb (2.1, 2.2, 2.3) umfasst.

16. Anlage nach Anspruch 14 oder 15, **dadurch gekennzeichnet, dass** an dem Eingang für das Zustandssignal ein Anlagenparametermodul angeschlossen ist, so dass der Sicherheitsstellwert (SSW) in Abhängigkeit von mindestens einem Anlagenparameterwert festgelegt wird, wobei der mindestens eine Anlagenparameterwert insbesondere ein Druckwert, ein Temperaturwert, ein Strömungswert ist.

17. Verfahren zum Betreiben einer Anlage für die Steuerung und/oder Regelung von Heizung-Lüftung-Klima (HLK) und/oder für den Brand- und/oder Raumschutz mit folgenden Schritten:
a) Erfassen eines Zustandssignals;
b) Festlegen des Sicherheitsstellwerts in Abhängigkeit vom Zustandssignal auf einen von mindestens zwei verschiedenen Stellwerten;
c) Festlegen des Sicherheitsstellwerts auf einen anderen der mindestens zwei verschiedenen Stellwerte, wenn das Zustandssignal eines gewissen vorgegebenen Schwellwert überschreitet;
d) Detektieren eines Abfalls oder Ausfalls einer Stromspeisungsschaltung und
e) bei Bedarf Auslösen eines Sicherheitsbetriebs, in welchem eine Sicherheitsposition des Stellglieds entsprechend dem Sicherheitsstellwert angefahren wird.

18. Verfahren nach Anspruch 17, **dadurch gekennzeichnet, dass** das Erfassen des Zustandssignal und das Festlegen des Sicherheitsstellwerts in einem Normalbetrieb der Anlage erfolgt.

19. Verfahren nach Anspruch 17 oder 18, **dadurch gekennzeichnet, dass** das Zustandssignal aus mindestens einen Anlagenparameterwert besteht.

20. Verfahren nach einem der Ansprüche 17 bis 19, **dadurch gekennzeichnet, dass** der Sicherheitsstellwert (SSW) zeitabhängig ermittelt wird, insbesondere abhängig von der Tageszeit, vom Wochentag und/oder von der Jahreszeit.

21. Verfahren nach einem der Ansprüche 17 bis 20, **dadurch gekennzeichnet, dass** mehrere Sensorsignale von intern und/oder extern vom Stellantrieb angeordneten Sensoren (11.1, 11.2, 11.3,... 11.n) erfasst werden.

22. Verfahren nach einem der Ansprüche 17 bis 21, **dadurch gekennzeichnet, dass** bei Abfall oder Wegfall der Stromspeisungsschaltung (8.1, 8.2, 8.3) der Sicherheitsbetrieb nur dann ausgelöst wird, wenn der Abfall oder Wegfall während einer vorgegebenen Mindestzeitspanne bestehen bleibt.

23. Computerprogrammprodukt zur Durchführung des Verfahrens nach einem der Ansprüche 17 - 22.

## Claims

1. Safety controller for an actuator,
in particular for an actuator having an actuating drive (2.1, 2.2, 2.3) with a flap (3.1, 3.2, 3.3) or a valve for open-loop or closed-loop control of a gas or liquid flow,
in particular for use in an installation for heating/ventilation/air conditioning (HLK), fire protection and/or area protection,
having a setpoint output circuit (1.1, 1.2, 1.3) which outputs a safe setpoint (SSW), which defines a safe position of the actuator, for the actuator, wherein the setpoint output circuit (1.1, 1.2, 1.3) has at least one input (E1, ..., E4) for a variable state signal, and wherein the setpoint output circuit (1.1, 1.2, 1.3) is designed to set the safe setpoint (SSW) to one of at least two different setpoints (SW1, SW2, ...) as a function of said state signal,
**characterized in that**
the setpoint output circuit (1.1, 1.2, 1.3) is designed in such a way that if the at least one variable state signal exceeds a particular predefined threshold value, the safe setpoint (SSW) is fixed to another of the at least two different setpoints (SW1, SW2,...)

2. Safety controller according to Claim 1, **characterized in that** the safety controller comprises a controller (10), which comprises an input for a voltage drop signal or a detector for a voltage drop of an external current feed circuit (8.1, 8.2, 8.3) and has a safety mode in which, in the event of a predetermined voltage drop, the actuator (2.1, 2.2, 2.3) is moved with the aid of an electrical energy store (30), in particular a capacitive energy store, to the safe position which corresponds to the safe setpoint (SSW) which is output by the setpoint output circuit (1.1, 1.2, 1.3).

3. Safety controller according to Claim 1 or 2, **characterized in that** the safety controller comprises a sensor (11.4) which is connected to the at least one input (E3) for the variable state signal such that the safe setpoint (SSW) is fixed to one of the at least two different setpoints (SW1, SW2, ...) as a function of a signal from the sensor (11.4).

4. Safety controller according to one of Claims 1 to 3, **characterized in that** an installation parameter module (12) is connected to the input (E1) for the state signal such that the safe setpoint is fixed as a function of at least one parameter value of the installation control unit (12).

5. Safety controller according to one of Claims 1 to 4, **characterized in that** a manually operable adjusting apparatus (13) is connected to the input (E4) for the state signal, such that the safe setpoint is fixed as a function of an instantaneous position of the adjusting apparatus (13).

6. Safety controller according to one of Claims 1 to 5, **characterized in that** the safety controller has a data interface (E2) for access to a server (15), and **in that** the safe setpoint is fixed as a function of at least one parameter value of the server (15).

7. Safety controller according to one of Claims 2 to 6, **characterized in that** the safety controller comprises a capacitive energy store (30), and **in that** the controller (10) is integrated in a microprocessor (16) for controlling the energy store (30).

8. Safety controller according to one of Claims 2 to 7, **characterized in that** the safety controller comprises a drive controller (6.3).

9. Safety controller according to one of Claims 3 to 8, **characterized in that** the sensor (11.1, 11.2, 11.3) is a gas sensor, a smoke sensor, a temperature sensor, an air-pressure sensor and/or a flow sensor.

10. Safety controller according to one of Claims 1 to 9, **characterized in that** a time module (17) is provided in order to determine the safe setpoint (SSW) as a function of time, in particular as a function of the time of day, the day of the week and/or the season.

11. Safety controller according to one of Claims 1 to 10, **characterized in that** the safety controller has a delay circuit (18) in order to change to the safety mode only after a delay time has elapsed in the event of absence or failure of the current feed circuit (8).

12. Actuator having an actuating drive (2.1, 2.2, 2.3) for positioning of a flap (3.1, 3.2, 3.3) or of a valve for open-loop or closed-loop control of a gas or liquid flow, in particular for use in an installation for heating/ventilation/air conditioning (HLK), fire protection and/or area protection, **characterized by** a safety controller according to one of Claims 1 to 11.

13. Safety circuit (1.4) having a capacitive energy store (30), a detector (27) for a voltage drop of an external current feed circuit (8.1, 8.2, 8.3) and a controller (10), **characterized by** a safety controller according to one of Claims 1 to 11.

14. Installation for open-loop and/or closed-loop control of heating/ventilation/air conditioning (HLK) and/or for fire protection and/or room protection, having at least one actuating drive (2.1, 2.2, 2.3) and a flap (3.1, 3.2, 3.3), which is driven thereby, or a valve for open-loop or closed-loop control of a gas or liquid flow, **characterized by** a safety controller according to one of Claims 1 to 11.

15. Installation according to Claim 14, **characterized in that** the installation comprises at least one sensor (11.1, 11.2, 11.3) externally from the actuating drive (2.1, 2.2, 2.3).

16. Installation according to Claim 14 or 15, **characterized in that** an installation parameter module is connected to the input for the state signal, such that the safe setpoint (SSW) is fixed as a function of at least one installation parameter value, with the at least one installation parameter value being, in particular, a pressure value, a temperature value, a flow value.

17. Method for operation of an installation for open-loop and/or closed-loop control of heating/ventilation/air conditioning (HLK) and/or for fire protection and/or area protection having the following steps:
a) detection of a state signal;
b) fixing of the safe setpoint as a function of the state signal to one of at least two different setpoints;
c) fixing of the safe setpoint to another of the at least two different setpoints, if the state signal exceeds a particular predefined threshold value;
d) detection of absence or failure of a current feed circuit and
e) if required, initiation of a safety mode, in which the actuator is moved to a safe position, corresponding to the safe setpoint.

18. Method according to Claim 17, **characterized in that** the state signal is detected and the safe setpoint is fixed during normal operation of the installation.

19. Method according to Claim 17 or 18, **characterized in that** the state signal consists of at least one installation parameter value.

20. Method according to one of Claims 17 to 19, **characterized in that** the safe setpoint (SSW) is determined as a function of time, in particular as a function of the time of day, the day of the week and/or the season.

21. Method according to one of Claims 17 to 20, **characterized in that** a plurality of sensor signals are detected by sensors (11.1, 11.2, 11.3, ... 11.n), which are arranged within and/or externally from the actuating drive.

22. Method according to one of Claims 17 to 21, **characterized in that**, in the event of absence or failure of the current feed circuit (8.1, 8.2, 8.3), the safety mode is initiated only when the absence or failure remains throughout a predetermined minimum time interval.

23. Computer program product for carrying out the method according to one of Claims 17 to 22.

## Revendications

1. Commande de sécurité pour un actionneur, notamment pour un actionneur muni d'un servomoteur (2.1, 2.2, 2.3) avec un clapet (3.1, 3.2, 3.3) ou une vanne destiné(e) à la commande ou à la régulation d'un flux de gaz ou de liquide,
notamment destinée à être utilisée dans une installation de chauffage/ventilation/climatisation (CVC), de protection incendie et/ou de local,
comprenant un circuit de délivrance de valeur de réglage (1.1, 1.2, 1.3) qui délivre une valeur de réglage de sécurité (SSW) pour l'actionneur, laquelle définit une position de sécurité de l'actionneur,
le circuit de délivrance de valeur de réglage (1.1, 1.2, 1.3) possédant au moins une entrée (E1, ..., E4) pour un signal d'état variable, le circuit de délivrance de valeur de réglage (1.1, 1.2, 1.3) étant configuré pour définir la valeur de réglage de sécurité (SSW) en fonction dudit signal d'état à une parmi au moins deux valeurs de réglage (SSW1, SW2, ..) différentes,
**caractérisée en ce que**
le circuit de délivrance de valeur de réglage (1.1, 1.2, 1.3) est configuré de telle sorte qu'en cas de dépassement d'une valeur de seuil prédéfinie donnée de l'au moins un signal d'état variable, la valeur de réglage de sécurité (SSW) est définie à une autre des au moins deux valeurs de réglage (SW1, SW2, ...) différentes.

2. Commande de sécurité selon la revendication 1, **caractérisée en ce qu'**elle comprend un contrôleur (10), lequel comprend une entrée pour un signal de chute de tension ou un détecteur pour une chute de tension d'un circuit d'alimentation électrique (8.1, 8.2, 8.3) externe, et lequel dispose d'un mode de sécurité dans lequel, en présence d'une chute de tension prédéfinie, le servomoteur (2.1, 2.2, 2.3) est amené dans la position de sécurité à l'aide d'un accumulateur d'énergie électrique (30), notamment d'un accumulateur d'énergie capacitif, laquelle correspond à la valeur de réglage de sécurité (SSW) délivrée par le circuit de délivrance de valeur de réglage (1.1, 1.2, 1.3).

3. Commande de sécurité selon la revendication 1 ou 2, **caractérisée en ce qu'**elle comprend un capteur (11.4) qui est relié à l'au moins une entrée (E3) pour le signal d'état variable, de sorte que la valeur de réglage de sécurité (SSW) est définie en fonction d'un signal du capteur (11.4) comme étant une des au moins deux valeurs de réglage (SW1, SW2, ...) différentes.

4. Commande de sécurité selon l'une des revendications 1 à 3, **caractérisée en ce qu'**un module de paramètres d'équipement (12) est raccordé à l'entrée (E1) pour le signal d'état, de sorte que la valeur de réglage de sécurité est définie en fonction d'au moins une valeur de paramètre du module de commande d'équipement (12).

5. Commande de sécurité selon l'une des revendications 1 à 4, **caractérisée en ce qu'**un dispositif de réglage (13) à actionnement manuel est raccordé à l'entrée (E4) pour le signal d'état, de sorte que la valeur de réglage de sécurité est définie en fonction d'une position momentanée du dispositif de réglage (13).

6. Commande de sécurité selon l'une des revendications 1 à 5, **caractérisée en ce qu'**elle possède une interface de données (E2) pour un accès à un serveur (15) et **en ce que** la valeur de réglage de sécurité est définie en fonction d'au moins une valeur de paramètre du serveur (15).

7. Commande de sécurité selon l'une des revendications 2 à 6, **caractérisée en ce qu'**elle comprend un accumulateur d'énergie (30) capacitif et **en ce que** le contrôleur (10) est intégré dans un microprocesseur (16) servant à commander l'accumulateur d'énergie (30).

8. Commande de sécurité selon l'une des revendications 2 à 7, **caractérisée en ce qu'**elle comprend une commande d'entraînement (6.3).

9. Commande de sécurité selon l'une des revendications 3 à 8, **caractérisée en ce que** le capteur (11.1, 11.2, 11.3) est un capteur de gaz, un capteur de fumées, un capteur de température, un capteur de pression atmosphérique et/ou un capteur d'écoulement.

10. Commande de sécurité selon l'une des revendications 1 à 9, **caractérisée en ce qu'**il existe un module de temps (17) afin de déterminer la valeur de réglage de sécurité (SSW) en fonction du temps, notamment en fonction de l'heure, du jour de la semaine et/ou de la saison.

11. Commande de sécurité selon l'une des revendications 1 à 10, **caractérisée en ce qu'**elle comprend un circuit de retard (18) pour ne passer en mode de sécurité qu'après un temps de retard en cas de défaillance ou de panne complète du circuit d'alimentation électrique (8).

12. Actionneur muni d'un servomoteur (2.1, 2.2, 2.3) servant à positionner un clapet (3.1, 3.2, 3.3) ou une vanne destinée à la commande ou à la régulation d'un flux de gaz ou de liquide, notamment destinée à être utilisée dans une installation de chauffage/ventilation/climatisation (CVC), de protection incendie et/ou de local, **caractérisée par** une commande de sécurité selon l'une des revendications 1 à 11.

13. Circuit de sécurité (1.4) comprenant un accumulateur d'énergie capacitif (30), un détecteur (27) pour une chute de tension d'un circuit d'alimentation électrique (8.1, 8.2, 8.3) externe et un contrôleur (10), **caractérisé par** une commande de sécurité selon l'une des revendications 1 à 11.

14. Équipement pour la commande et/ou la régulation d'une installation de chauffage/ventilation/climatisation (CVC) et/ou pour la protection incendie et/ou de local, comprenant au moins un servomoteur (2.1, 2.2, 2.3) et un clapet (3.1, 3.2, 3.3) entraîné par celui-ci ou une vanne destinée à la commande ou à la régulation d'un flux de gaz ou de liquide, **caractérisé par** une commande de sécurité selon l'une des revendications 1 à 11.

15. Équipement selon la revendication 14, **caractérisé en ce qu'**il comprend au moins un capteur (11.1, 11.2, 11.3) externe au servomoteur (2.1, 2.2, 2.3).

16. Équipement selon la revendication 14 ou 15, **caractérisé en ce qu'**un module de paramètres d'équipemerct est raccordé à l'entrée pour le signal d'état, de sorte que la valeur de réglage de sécurité (SSW) est définie en fonction d'au moins une valeur de paramètre d'équipement, l'au moins une valeur de paramètre d'équipement étant notamment une valeur de pression, une valeur de température, une valeur d'écoulement.

17. Procédé pour faire fonctionner un équipement pour la commande et/ou la régulation d'une installation de chauffage/ventilation/climatisation (CVC) et/ou pour la protection incendie et/ou de local, comprenant les étapes suivantes :
a) acquisition d'un signal d'état ;
b) définition de la valeur de réglage de sécurité en fonction du signal d'état à une parmi au moins deux valeurs de réglage différentes ;
c) définition de la valeur de réglage de sécurité à une autre des au moins deux valeurs de réglage différentes lorsque le signal d'état dépasse une certaine valeur de seuil prédéfinie ;
d) détection d'une défaillance ou d'une panne d'un circuit d'alimentation électrique et
e) au besoin, déclenchement d'un mode de sécurité dans lequel l'actionneur gagne une position de sécurité conformément à la valeur de réglage de sécurité.

18. Procédé selon la revendication 17, **caractérisé en ce que** l'acquisition du signal d'état et la définition de la valeur de réglage de sécurité s'effectuent dans un mode de fonctionnement normal de l'équipement.

19. Procédé selon la revendication 17 ou 18, **caractérisé en ce que** le signal d'état se compose d'au moins une valeur de paramètre d'équipement.

20. Procédé selon l'une des revendications 17 à 19, **caractérisé en ce que** la valeur de réglage de sécurité (SSW) est déterminée en fonction du temps, notamment en fonction de l'heure, du jour de la semaine et/ou de la saison.

21. Procédé selon l'une des revendications 17 à 20, **caractérisé en ce que** plusieurs signaux de capteur en provenance de capteurs (11.1, 11.2, 11.3, ..., 11.n) disposés à l'intérieur et/ou à l'extérieur du servomoteur sont acquis.

22. Procédé selon l'une des revendications 17 à 21, **caractérisé en ce qu'**en cas de défaillance ou de panne complète du circuit d'alimentation électrique (8.1, 8.2, 8.3), le mode de sécurité n'est déclenché que si la défaillance ou la panne complète persiste pendant un intervalle de temps minimum prédéfini.

23. Produit programme informatique destiné à mettre en oeuvre le procédé selon l'une des revendications 17 à 22.
